# EUROPEAN PATENT SPECIFICATION

(11) **EP 2 919 434 B1**
(45) Date of publication and mention of the grant of the patent: **17.02.2021**
(21) Application number: 15158181.6
(22) Date of filing: 09.03.2015
(51) Int. Cl.: H04L 29/08, H04W 4/80, H04L 29/06, H04W 12/06

(54) **METHOD FOR DETERMINING DATA SOURCE**
VERFAHREN ZUR BESTIMMUNG DER DATENQUELLE
PROCÉDÉ DE DÉTERMINATION DE SOURCE DE DONNÉES

(30) Priority: 14.03.2014 KR 20140030626
(43) Date of publication of application: 16.09.2015
(73) Proprietor: Samsung Electronics Co., Ltd., Gyeonggi-do 443-742 (KR)
(72) Inventor: Kim, Tae Kyung, 443-742 Gyeonggi-do (KR); Han, Seung Wok, 443-742 Gyeonggi-do (KR); Lee, Seung Eun, 443-742 Gyeonggi-do (KR); Kim, Won Kook, 443-742 Gyeonggi-do (KR); Hyun, Eun Jung, 443-742 Gyeonggi-do (KR)
(74) Representative: HGF

(56) References cited:
- EP-A1- 1 974 662
- US-A1- 2004 127 774
- US-A1- 2011 144 779
- US-A1- 2012 106 449
- GAUTAM THATTE ET AL: "Optimal Time-Resource Allocation for Energy-Efficient Physical Activity Detection", IEEE TRANSACTIONS ON SIGNAL PROCESSING, IEEE SERVICE CENTER, NEW YORK, NY, US, vol. 59, no. 4, 1 April 2011 (2011-04-01), pages 1843-1857, XP011349835, ISSN: 1053-587X, DOI: 10.1109/TSP.2010.2104144

## Description

### CROSS-REFERENCE TO RELATED APPLICATION(S)

This application claims the benefit of priority from a Korean patent application filed on March 14, 2014 in the Korean Intellectual Property Office and assigned Serial number 10-2014-0030626.

### TECHNICAL FIELD

The present disclosure relates to various methods for determining a data source from which to receive data in a situation where an electronic device receives data from several devices and to an electronic device configured to determine a data source in accordance with said methods.

### BACKGROUND

With development of electronic devices, such as smartphones, various services may be provided to users. For example, users may receive various services providing games, Internet, education, economic activity, and health care in addition to functions such as calls or message exchanges using an electronic device. Furthermore, as communication networks develop, a communication made between user terminals extends to a communication between a user terminal and a server, a user terminal and a peripheral device, and a user terminal and a sensor. The developments of such electronic devices and communication networks may provide an environment in which various and massive information is distributed.

Electronic devices may collect information through various methods. For example, electronic devices may obtain information by using built-in sensors or may obtain information from other electronic devices connected to the electronic devices via networks. However, as functions mounted in electronic devices are increased and the types and number of electronic devices that users utilize are increased also, the same type of data may be obtained redundantly. However, according to conventional methods, data may be obtained from sensors pre-registered (or mounted) in an electronic device or may be obtained from another device connected first to the electronic device.

However, for example, data obtained from an electronic device such as medical equipment may require a high degree of accuracy. Additionally, if data transmission is interrupted, this may be fatal to a user (e.g., a patient).

The above information is presented as background information only to assist with an understanding of the present disclosure. No determination has been made, and no assertion is made, as to whether any of the above might be applicable as prior art with regard to the present disclosure.
GAUTHAM THATTE et al.: "Optimal Time-Resource Allocation for Energy-Efficient Physical Activity Detection", IEEE Transactions on Signal Processing, IEEE Service Center, New York, NY, US, vol. 59, no.4, 1 April 2011 (2011-04-01), pages 1843-1857, XP 011349835, ISSN: 1053-587X, DOI: 10.1109/TSP.2010.2104144 discloses a method as set forth in the preamble of the accompanying claim 1 and an electronic device as set forth in the preamble of the accompanying claim 7.

### SUMMARY

Aspects of the present disclosure are to address at least the above-mentioned problems and/or disadvantages and to provide at least the advantages described below. Accordingly, an aspect of the present disclosure is to provide various methods for determining a data source (e.g., a data providing device) in an environment that an electronic device receives data from a plurality of data sources.

The invention is defined by the appended independent claims. Further embodiments are defined by the appended dependent claims.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating a system including an electronic device and a data providing device according to various embodiments of the present disclosure;
FIG. 2 is a view illustrating a communication between an electronic device and a data providing device according to various embodiments of the present disclosure;
FIG. 3 is a conceptual diagram of an electronic device for determining a data providing device according to various embodiments of the present disclosure;
FIG. 4 is a conceptual diagram of an electronic device for data processing according to various embodiments of the present disclosure;
FIG. 5 is a flowchart illustrating a situation information collection and evaluation system according to various embodiments of the present disclosure;
FIG. 6 is a flowchart illustrating a process for selecting a data source according to various embodiments of the present disclosure;
FIG. 7 is a flowchart illustrating a process for selecting a data source according to various embodiments of the present disclosure;
FIG. 8 is a flowchart illustrating a user input process for determining a data providing device according to various embodiments of the present disclosure;
FIG. 9 is flowchart illustrating a process for changing a data providing device according to various embodiments of the present disclosure; and
FIG. 10 is a block diagram illustrating a hardware configuration of an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

Throughout the description and claims of this specification, the singular encompasses the plural unless the context otherwise requires. In particular, where the indefinite article is used, the specification is to be understood as contemplating plurality as well as singularity. It is thus to be understood that the singular forms "a," "an," and "the" include plural referents unless the context clearly dictates otherwise. Thus, for example, reference to "a component surface" includes reference to one or more of such surfaces.

The terms "include," "comprise," "contain", "have", "may include," "may comprise" "may contain", and "may have" used herein each indicate disclosed functions, operations, or existence of elements but do not exclude other functions, operations or elements. The meaning of "include," "comprise," "including," or "comprising," specifies a property, a region, a fixed number, an operation, a process, an element and/or a component but is not intended to (and does not) exclude other properties, regions, fixed numbers, operations, processes, elements and/or components: these terms should be understood in the sense of "including but not limited to".

In this specification, the expression "or" includes any or all combinations of words listed. For example, "A or B" may include A or include B or include both A and B.

The terms such as "1st", "2nd", "first", "second", and the like used herein may refer to modifying various different elements of various embodiments of the present disclosure, but do not limit the elements. For instance, such terms do not limit the order and/or priority of the elements. Furthermore, such terms may be used to distinguish one element from another element. For instance, both "a first user device" and "a second user device" indicate a user device but indicate different user devices from each other. For example, a first component may be referred to as a second component and vice versa without departing from the scope of the present disclosure.

In this disclosure below, when one part (or element, device, and the like) is referred to as being 'connected' to another part (or element, device, and the like), it should be understood that the former can be 'directly connected' to the latter, or 'electrically connected' to the latter via an intervening part (or element, device, and the like). In contrast, when an element is referred to as being "directly connected" or "directly coupled" to another element, there are no intervening elements present.

Terms used in this specification are used to describe specific embodiments of the present disclosure, and are not intended to limit the scope of the present disclosure.

Unless indicated herein, all the terms used herein, which include technical or scientific terms, may have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning.

Additionally, an electronic device according to various embodiments of the present disclosure may be a device with a communication function. For instance, electronic devices may include at least one of smartphones, tablet personal computers (PCs), mobile phones, video phones, electronic book (e-book) readers, desktop PCs, laptop PCs, netbook computers, personal digital assistants (PDAs), portable multimedia player (PMPs), digital audio players, mobile medical devices, cameras, and wearable devices (e.g., head-mounted-devices (HMDs) such as electronic glasses, electronic apparel, electronic bracelets, electronic necklaces, electronic appcessories, electronic tattoos, and smart watches).

According to various embodiments of the present disclosure, an electronic device may be smart home appliances having a communication function. The smart home appliances may include at least one of, for example, televisions (TVs), digital video disk (DVD) players, audios, refrigerators, air conditioners, cleaners, ovens, microwave ovens, washing machines, air cleaners, set-top boxes, TV boxes (e.g., Samsung HomeSync™, Apple TV™ or Google TV™), game consoles, electronic dictionaries, electronic keys, camcorders, and electronic picture frames.

According to various embodiments of the present disclosure, an electronic device may include at least one of various medical devices (e.g., magnetic resonance angiography (MRA) devices, magnetic resonance imaging (MRI) devices, computed tomography (CT) devices, medical imaging devices, ultrasonic devices, and the like), navigation devices, global positioning system (GPS) receivers, event data recorders (EDRs), flight data recorders (FDRs), vehicle infotainment devices, marine electronic equipment (e.g., marine navigation systems, gyro compasses, and the like), avionics, security equipment, car head units, industrial or household robots, financial institutions' automatic teller's machines (ATMs), and stores' point of sales (POS).

According to various embodiments of the present disclosure, an electronic device may include at least one of furniture or buildings/structures having a communication function, electronic boards, electronic signature receiving devices, projectors, and various measuring instruments (e.g., water, electricity, gas, or radio signal measuring instruments). An electronic device according to various embodiments of the present disclosure may be one of the above-mentioned various devices or a combination thereof. Additionally, an electronic device according to various embodiments of the present disclosure may be a flexible device. Furthermore, it is apparent to those skilled in the art that an electronic device according to various embodiments of the present disclosure is not limited to the above-mentioned devices.

Hereinafter, an electronic device according to various embodiments of the present disclosure will be described in more detail with reference to the accompanying drawings. The term "user" in various embodiments of the present disclosure may refer to a person using an electronic device or a device using an electronic device (e.g., an artificial intelligent electronic device).

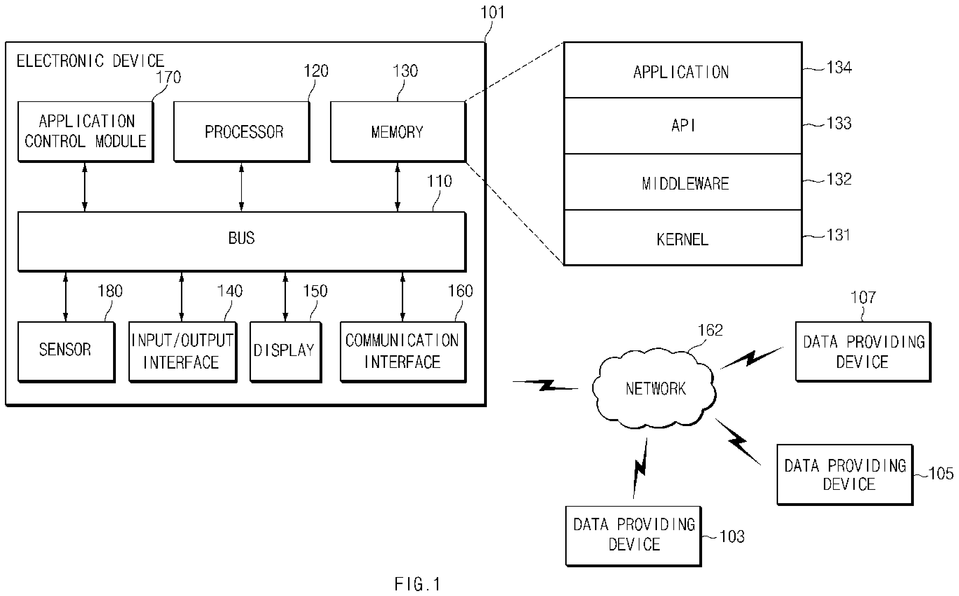

FIG. 1 is a view illustrating a system including an electronic device and a data providing device according to various embodiments of the present disclosure.

Referring to FIG. 1, an electronic device 101 may include a bus 110, a processor 120, a memory 130, an input/output interface 140, a display 150, a communication interface 160, an application control module 170, and at least one sensor 180, but is not limited thereto.

The bus 110 may be a circuit connecting the above-mentioned components to each other and delivering a communication signal (e.g., a control message) therebetween.

The processor 120, for example, receives an instruction from the above other components (e.g., the memory 130, the input/output interface 140, the display 150, the communication interface 160, the application control module 170, or the at least one sensor 180) through the bus 110, interprets the received instruction, and performs operations and data processing in response to the interpreted instruction.

The memory 130 may store an instruction or data received from the processor 120 or other components (e.g., the input/output interface 140, the display 150, the communication interface 160, the application control module 170, or the at least one sensor 180) or an instruction or data generated from the processor 120 or other components. The memory 130, for example, may include programming modules, for example, a kernel 131, a middleware 132, an application programming interface (API) 133, and an application 134. Each of the above-mentioned programming modules may be configured with software, firmware, hardware, or a combination thereof.

The kernel 131 may control or manage system resources (e.g., the bus 110, the processor 132, or the memory 133) used for performing operation or functions implemented by the remaining other programming modules, for example, the middleware 134, the API 120, or the application 130. Additionally, the kernel 131 may provide an interface for accessing an individual component of the electronic device 101 from the middleware 132, the API 133, or the application 134 and controlling or managing the individual component.

The middleware 132 may serve as an intermediary role for exchanging data between the API 133 or the application 134 and the kernel 131 through communication. Additionally, in relation to job requests received from the application 134, the middleware 132 may perform a control (e.g., scheduling or load balancing) for the job requests by using a method of assigning a priority for using a system resource (e.g., the bus 110, the processor 120, or the memory 130) of the electronic device 101 to at least one application among the applications 134.

The API 133, as an interface through which the application 134 controls a function provided from the kernel 131 or the middleware 132, may include at least one interface or function (e.g., an instruction) for file control, window control, image processing, or character control.

According to various embodiments of the present disclosure, the application 134 may include a Short Message Service (SMS)/Multimedia Messaging Service (MMS) application, an e-mail application, a calendar application, an alarm application, a health care application (e.g., an application for measuring an exercise amount or blood sugar), or an environmental information application (e.g., an application for providing pressure, moisture, or temperature information). Additionally or alternatively, the application 134 may be an application relating to information exchange between the electronic device 101 and data providing devices 103, 105, and 107, or the sensor 180. The application relating to information exchange, for example, may include a notification relay application for delivering specific information to the external electronic device or a device management application for managing the external electronic device.

For example, the notification relay application may have a function for delivering to an external electronic device (e.g., the data providing device 103) notification information occurring from another application (e.g., an SMS/MMS application, an e-mail application, a health care application, or an environmental information application) of the electronic device 101. Additionally or alternatively, the notification relay application may receive notification information from an external electronic device (e.g., the data providing device 103) and may then provide the received notification information to a user. The device management application, for example, may manage (e.g., install, delete, or update) a function (e.g., turning on/off an external electronic device (or some components) or adjusting the brightness (or resolution) of a display) for at least part of an external electronic device (e.g., the data providing device 103) communicating with the electronic device 101, an application operating in the external electronic device, or a service (e.g., a call service or a message service) provided from the external electronic device.

According to various embodiments of the present disclosure, the application 134 may include an application specified according to the property (e.g., the type of an electronic device) of the external electronic device (e.g., the data providing device 103). For example, when an external electronic device is a Moving Picture Experts Group (MPEG-1 or MPEG-2) or Audio Layer III (MP3) player, the application 134 may include an application relating to music playback. Similarly, when an external electronic device is a mobile medical device, the application 134 may include an application relating to health care. According to an embodiment of the present disclosure, the application 134 may include at least one of an application specified to the electronic device 101 and an application received from an external electronic device (e.g., the data providing devices 103, 105, and 107).

The input/output interface 140 may deliver an instruction or data inputted from a user through an input/output device (e.g., a sensor, a keyboard, or a touch screen), to the processor 120, the memory 130, the communication interface 160, the application control module 170, or the sensor 180 through the bus 110. For example, the input/output interface 140 may provide data on a user's touch inputted through a touch screen to the processor 120. Additionally, the input/output interface 140 may output an instruction or data received from the processor 120, the memory 130, the communication interface 160, the application control module 170, or the sensor 180 through the bus 110, through the input/output device (e.g., a speaker or a display). For example, the input/output interface 140 may output voice data processed through the processor 120 to a user through a speaker.

The display 150 may display various information (e.g., multimedia data or text data) to a user.

The communication interface 160 may connect a communication between the electronic device 101 and an external device (e.g., the data providing device 103). For example, the communication interface 160 may communicate with the external device in connection to a network 162 through wireless communication or wired communication. The wireless communication may include at least one of wireless fidelity (Wi-Fi), Bluetooth (BT), near field communication (NFC), GPS, and cellular communication (e.g., long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM)). The wired communication may include at least one of universal serial bus (USB), high definition multimedia interface (HDMI), recommended standard 232 (RS-232), and plain old telephone service (POTS), for example.

According to an embodiment of the present disclosure, the network 162 may be telecommunications network. The telecommunications network may include at least one of computer network, Internet, Internet of things (IoT), and telephone network. According to an embodiment of the present disclosure, a protocol (e.g., transport layer protocol, data link layer protocol, or physical layer protocol) for communication between the electronic device 101 and an external device may be supported by at least one of the application 134, the API 133, the middleware 132, the kernel 131, and the communication interface 160.

The application control module 170 may perform a function corresponding to life coaching on a user by providing a mission for achieving an appropriate target to the user, monitoring a mission execution state, or providing a reward according to a mission execution result on the basis of user information obtained from various fields such as user's health, lifestyle, finance, or exercise through various methods. According to various embodiments of the present disclosure, the application control module 170 may process at least part of information obtained from other components (e.g., the processor 120, the memory 130, the input/output interface 140, the communication interface 160, or the sensor 180) and may output the information obtained from other components to a user through various methods. For example, the application control module 170 may select an appropriate application from a plurality of applications stored in the memory 130 on the basis of user information received through the input/output interface 140. The selected application may provide appropriate service to a user of the electronic device 101 on the basis of data obtained from at least one sensor 180 or the data providing device 103 through the network 162. Additionally, the application control module 170 may select or control an appropriate application in order to obtain information from various sensors or components mounted in the first electronic device 101, or process information obtained therefrom.

The sensor 180 may detect various data. For example, the sensor 180 may detect the physical environment (e.g., pressure, acceleration, position, temperature/humidity, illumination, and ultraviolet (UV) Index) of the electronic device 101. Additionally, the sensor 180 may detect or obtain information relating to a user (e.g., whether a user grips, whether a user is close to the electronic device 101, a user's biometrics, and medical information such as heart rate walking state, and brain wave).

The sensor 180 may operate as a kind of a data providing device (e.g., the data providing devices 103, 105, and 107). For example, when the sensor 180 is a heart rate monitor (HRM) sensor and the data providing device 103 is a heart rate measurement device, the sensor 180 and the data providing device 103 may provide the same type of data (e.g., a user's heart rate) to the electronic device 101.

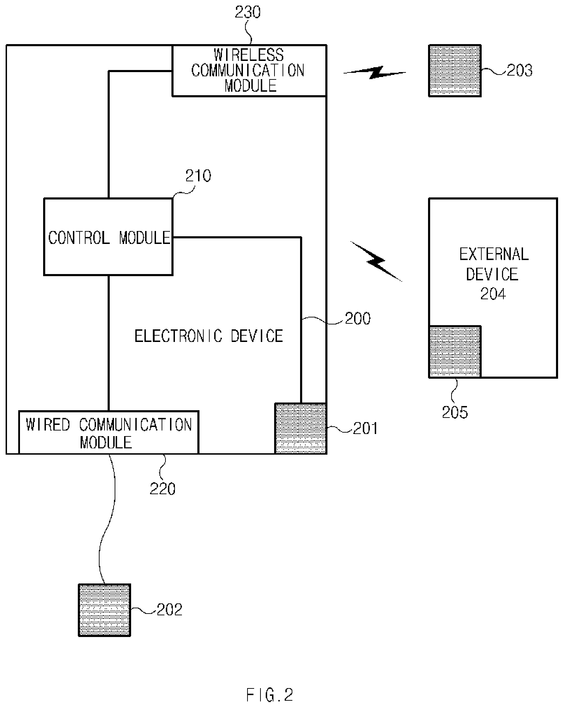

FIG. 2 is a view illustrating a communication between an electronic device and a data providing device according to various embodiments of the present disclosure.

Referring to FIG. 2, an electronic device 200 (e.g., the electronic device 101) may include at least one of a control module 210, a wired communication module 220, and a wireless communication module 230. Additionally, the electronic device may include a sensor 201 (e.g., the sensor 180) therein.

The electronic device 200 may obtain data through a communication with various data providing devices. For example, the electronic device 200 may obtain data detected by and provided from the sensor 201 disposed inside the electronic device 200. For example, the sensor 201 may provide the detected data to the control module 210 through a data bus (e.g., the bus 110) provided between the sensor 201 and the control module 210. There may be a processing module (e.g., a microprocessor or a chip) for processing or treating raw data detected from the sensor 201 between the sensor 201 and the control module 210. For example, smartphones or smart watches may obtain user's heart rate data from a biological sensor (e.g., an HRM sensor) mounted therein.

The electronic device 200 may obtain data detected by and provided from a data providing device 202 connected through the wired communication module 220. The wired communication module 220 may be a connector for supporting wired connection such as a USB connector and a Thunderbolt™ connector. According to various embodiments of the present disclosure, the data providing device 202 connected to the electronic device 200 through wired connection may be a stand-alone sensor device (e.g., a thermometer/hygrometer, a heart rate sensor, and brainwave measurement instrument).

The electronic device 200 may obtain data detected by and provided from another data providing device connected through the wireless communication module 230. For example, the wireless communication module 230 may obtain data from a data providing device 203 disposed outside the electronic device 200. According to various embodiments of the present disclosure, the data providing device 203 may be an independent sensor device, such as the data providing device 202.

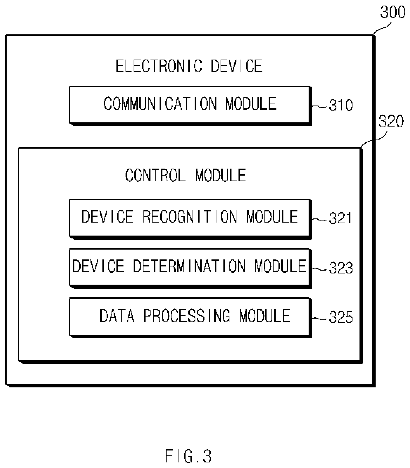

The electronic device 200 may obtain (e.g., receive a biological signal detected by an external device 204) data from the external device 204 (e.g., the data providing devices 103, 105, and 107). The data obtained from the external device 204 may be data obtained by a sensor 205 in the external device 204. According to various embodiments of the present disclosure, the electronic device 200 may be a smartphone and the electronic device 204 may be a smart watch. In the above embodiment of the present disclosure, the smartphone may receive data detected by a heart rate sensor (or a pulse sensor, or a temperature sensor) (e.g., the sensor 205) in the smart watch. In this case, the smartphone may receive the same type of data (e.g., a biological signal detected by a heart rate sensor, a pulse sensor, or a temperature sensor) by a sensor (e.g., the sensor 201) mounted in the smartphone itself. According to various embodiments of the present disclosure, the electronic device 200 (e.g., a smartphone) may determine from which data providing device data is to be received (or which data is to be used among received data), among data obtained from a plurality of data providing devices in such a way. A configuration of an electronic device relating thereto will be described with reference to FIG. 3.

FIG. 3 is a conceptual diagram of an electronic device for determining a data providing device according to various embodiments of the present disclosure.

Referring to FIG. 3, an electronic device 300 (e.g., the electronic device 101 and the electronic device 200) may include a communication module 310 and a control module 320.

According to an embodiment of the present disclosure, the display module 310 may perform a function including a wired connection (e.g., a cable communication through the wired communication module 220), a wireless communication (e.g., a wireless communication through the wireless communication module 230), and a data communication (e.g., a communication between the control module 210 and the sensor 201) inside the electronic device 200. In various embodiments of the present disclosure, the communication module 310 may perform at least one of the wired connection, the wireless connection, and the internal data communication.

In various embodiments of the present disclosure, the communication module 310 may communicate with at least one external device (e.g., the external device 204) and may be functionally connected to the control module 320. In various embodiments of the present disclosure, the external device may include at least one of a biological information sensor, a physical information sensor, and a medical information sensor.

In various embodiments of the present disclosure, the electronic device 300 may recognize at least one data providing device (e.g., the data providing device 103). For example, the electronic device 300 may scan for (e.g., search for or find) a data providing device for providing corresponding information to the electronic device 300 to obtain specified information. For example, the communication module 310 may search for (e.g., scan for) a plurality of devices connectable to the electronic device 300 through a communication network such as BT, Bluetooth low energy (BLE), Wi-Fi, Wi-Fi direct, or third generation (3G)/LTE and a data bus (e.g., bus 110) inside the electronic device 300 and may provide a search result to the control module 320 (e.g., a device recognition module 321). Additionally, the communication module 310 may obtain information (e.g., state information on a data providing device, power information, and authentication information) utilized for determining a data providing device, which is requested from the control module 320 (e.g., a device determination module 323), from external devices.

The control module 320 may include at least one of the device recognition module 321, the device determination module 323, and a data processing module 325. The control module 320 may check approval related information on a sensor (e.g., the sensor 180 and the sensor 201) in an electronic device or the external device (e.g., the data providing device 107 and the external device 204), correction related information, or a power state of an external device. The above information will be described later.

The device recognition module 321 may recognize a device capable of providing the specified information to the electronic device 300 according to the search result by the communication module 310 (e.g., the number of found data providing devices and a connection state). According to various embodiments of the present disclosure, the device recognition module 321 may recognize certain devices (e.g., three devices) capable of providing information that a user intends from among a plurality of found devices (e.g., ten devices).

For example, the electronic device 300 may recognize a device capable of providing specified information among various sensors disposed inside or outside the electronic device 300 or other electronic devices (e.g., the external device 204). For example, although searching for various biological sensors (e.g., a heart rate sensor), an electronic watch (e.g., a smart watch), an electronic glasses (e.g., an HMD, an electronic belt, electronic shoes, an electronic bracelet, an electronic ring, a tablet, and a laptop PC, if specified information is heart rate information, the electronic device 300 may recognize a heart rate sensor therein and an electronic watch or an electronic bracelet (when a heart rate sensor is mounted therein) as a data providing device capable of providing the heart rate information.

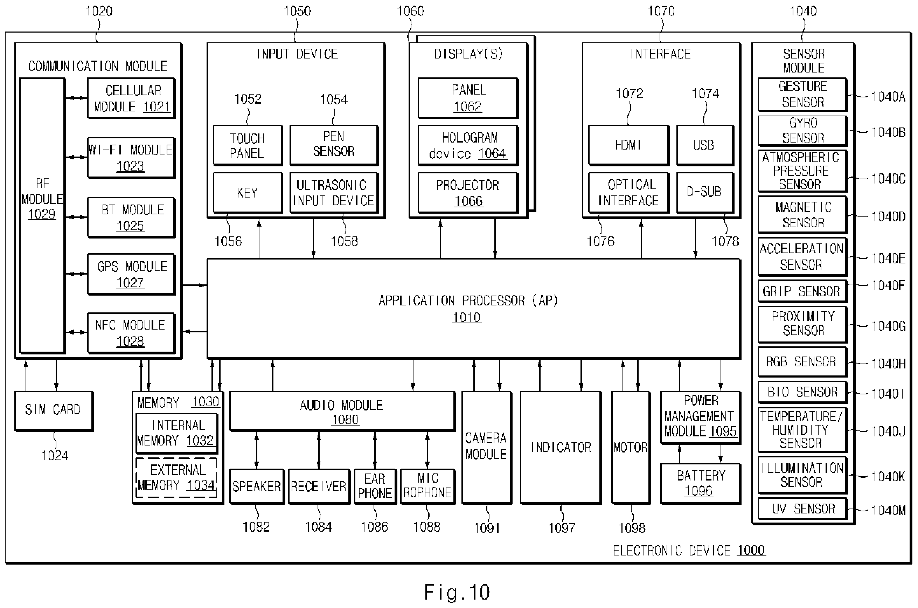

The device recognition module 321 may provide a recognition result (e.g., a list of recognized data providing devices) to a display module (not shown) (e.g., a display 1060 of FIG. 10) and the display module may display the recognition result on the screen of the electronic device 300.

According to various embodiments of the present disclosure, a data providing device may be registered in (e.g., connected to) the electronic device 300. For example, a user may register a plurality of data providing devices in the electronic device 300 and may use them to obtain data. For example, a data providing device may be connected to the electronic device 300 through wired or wireless communication (e.g., BT). In this case, an appropriate device registration interface may be provided through the screen of the electronic device 300. Additionally, various information relating to a registered data providing device, for example, information on the manufacturer, date of manufacture, hardware information, firmware version, and operating system (OS) type of a data providing device and the data error rate, data reliability, tolerance, and driving environment of a data providing device (or, a sensor mounted in a data providing device), may be stored in a storage unit (not shown) (e.g., the memory 130). According to various embodiments of the present disclosure, the information may be updated in the storage unit of the electronic device 300 by the device recognition module 321 according to a user's intent or at each predetermined time of a manufacturer.

The device determination module 323 may determine a device for providing data to the electronic device 300 among a plurality of data providing devices recognized by the electronic device 300. The device determination module 323 may determine to receive data from one device but in various cases such as the type of received data, a reception state, and a user setting, may determine to receive data from at least two devices.

According to an embodiment of the present disclosure, when there is additional information for determining a data providing device for providing data to the electronic device 300, the device determination module 323 may fetch information from a storage unit of the electronic device 300 or a configuration module of the electronic device 300 or may request and receive the additional information through the communication module 310. For example, in order to acquire data to be obtained over a long period of time (e.g., obtain brainwaves and/or snoring data (that is, snoring sound) relating to a user's sleeping state), the remaining battery power of a device providing data or whether the device is in a charging state may be one criterion for determining a data providing device.

According to certain embodiments of the present disclosure, the electronic device 300 itself may be recognized as one of the devices capable of providing specified information by the device recognition module 321. In certain embodiments, the device determining module 323 may determine as a data providing device: a recognized device determined to have the highest remaining battery power, a recognized device determined to having the longest continuous operating time, or a recognized device in a charging state (e.g., a device being charged in connection to an adaptor or by receiving power wirelessly). Where the electronic device 300 is a recognized device, the device determining module 323 may determine information on a power state (e.g., battery power, length of operation and/or charging state) by internally obtaining power state information for the electronic device 300 (e.g. information on the remaining battery power, operating time and/or information on a charging state of the electronic device 300). Alternatively or additionally, the device determining module 323 may determine information on a power state for recognized devices by requesting, through the communication module 310, information on a power state from at least one recognized device disposed outside the electronic device 300, and receiving the power state information through the communication module 310.

According to an embodiment of the present disclosure, the device determination module 323 may determine a data providing device on the basis of information received through the communication module 310. The device determination module 323 may use another information or means besides the obtained information in order to determine a data providing device. For example, the device determination module 323 may determine a priority of a data providing device on the basis of the obtained information and may provide the corresponding priority to a selection UI (e.g., a menu) according to priority through the screen (e.g., the display) of the electronic device 300. The device determination module 323 may determine a device for providing data to the electronic device 300 according to a user input for the selection menu. For example, even when the priority of a first data providing device is higher than the priority of a second data providing device, if a user determines the second data providing device as a device for providing data to the electronic device 300, the electronic device 300 may receive data from the second data providing device.

According to an embodiment of the present disclosure, the device determination module 323 may use a combination of various information in order to determine at least one device for providing data. For example, the device determination module 323 may utilize information having invariant properties such as the performance, date of manufacture, manufacturer, data reliability, error rate, and tolerance of each data providing device. Such information may correspond to specification information on a device.

Additionally, the device determination module 323 may utilize information varying according to a situation between the electronic device 300 (e.g., the electronic device 101) and a data providing device (e.g., the data providing device 103), for example, information on a network connection state (e.g., signal sensitivity such as a received signal strength indicator (RSSI) and the number of accessible base stations (BSs)), a connection type (e.g., wireless communication, wired communication, BT connection, Wi-Fi connection, and NFC connection), a battery state (e.g., the remaining battery power or an expected standby (or operating) time), and a charging state (e.g., an adapter connection state of a data providing device (or an electronic device including a data providing device (e.g., a sensor)) or the type of a connected adaptor (e.g., charging through a rating adaptor, charging through a USB cable, and charging through wireless power transmission)).

According to various embodiments of the present disclosure, the device determination module 323 may use authentication information on a data providing device to determine at least one device. The authentication information, for example, may be information authenticated as equipment (e.g., medical equipment) to allow the data providing device to perform a specified purpose. According to various embodiments of the present disclosure, the authentication may be performed by an official certification authority, the manufacturer, or other suppliers. For example, authentication information by an agency (e.g., Food and Drug Administration (FDA)) for performing medical compliance certification for medical instrument or authentication information by an agency (e.g., national radio research agency) for performing radio appliance compliance certification for an electronic device may be obtained. The authentication information may include information on a certification authority, a certification date, standards, reliability, tolerance, an appropriate (or legal) usage range of a device, a target, and a method as shown in the above. Additionally, when equipment correction is performed by an official correction official, information on whether regular correction is made and a recent correction date may be included in the authentication information.

According to various embodiments of the present disclosure, the device determination module 323 may use information on a wearing state of a data providing device to determine at least one device. According to various embodiments of the present disclosure, the information on a wearing state may include at least one of attachment or detachment information on an electronic device (e.g., the external device 204) or motion information on a user wearing an electronic device. For example, the attachment-detachment information may include whether an electronic device is worn, a contact degree of a worn electronic device, a wearing position, and a wearing angle. For example, an electronic watch may be worn on a user's wrist and an electronic ring may be worn on a user's finger. Additionally, an electronic glasses may be worn close to a user's eye and ear.

The information on a wearing state may further include information such as a wearing intensity (e.g., pressure information on a portion contacting the skin) or a position after wearing (e.g., after a user wears an electronic watch having a heart rate sensor attached, when the position of a wrist (or the electronic watch) is positioned higher or lower than the user's heart) in addition to a body part wearing an electronic device.

The wearing intensity, for example, may be measured by the intensity of a signal (e.g., a waveform) detected by wearing, a winding degree in the case that an electronic device is worn by winding such as a belt or a watch, and the magnitude of elastic force in the case that an electronic device is worn by elasticity (e.g., an electronic glasses). The position after wearing may be measured by a barometer or an altimeter in an electronic device or may be read by an external camera. For example, when a user wears a medical data providing device, the position after wearing may be read by an electronic device capturing a wearing state. In the above embodiment of the present disclosure, only when it is determined that a data providing device is worn at a correct position, an electronic device may determine to receive data from the data providing device or may determine information received from a determined data providing device as valid. User's motion information may include motion information such as user's walking, running, cycling, and swimming, which is measured by using an inertial sensor or an acceleration sensor of a worn electronic device. In various embodiments, such information may correspond to environmental information or context information.

The device determination module 323 may determine a device for providing data to the electronic device 300 by utilizing the above information according to specified criteria. In various embodiments of the present disclosure, the device determination module 323 may determine a data providing device for obtaining data from the data providing device according to a defined priority. For example, when data that the electronic device 300 is to receive is heart rate data or another medical data, a device for providing data to the electronic device 300 may be determined by setting data reliability or data error rate as the highest priority. For example, when a first data providing device provides heart rate information of 95% reliability and a second data providing device provides heart rate information of 90% reliability, even if a connection state or a power situation of the second data providing device is better, the device determination module 323 may determine the first data providing device as a data providing device for obtaining heart rate data from the data providing device.

In various embodiments of the present disclosure, the device determination module 323 ranks (or scores) a data providing device according to a weight by category and determines a data providing device obtaining a high score as a data providing device for providing data to the electronic device 300. For example, the device determination module 323 uses data reliability, connection state, and power situation information and gives a weight to each information to determine a data providing device having the highest summed score as a data providing device for providing data to the electronic device 300.

In various embodiments of the present disclosure, a weight or a priority may vary according to data that the electronic device 300 is to obtain. For example, when the data is data obtained by setting a high value on reliability, a high priority (or weight) may be given to data reliability or data error rate. For example, when the data is data setting a high value on connection persistence, a higher priority (or weight) may be given to a network connection state or a power situation (e.g., a higher priority or weight is given to wired connection rather than wireless connection and is given to a device receiving charging current by using an adaptor rather than a device in a battery operating state.

In various embodiments of the present disclosure, the device determination module 323 may display a list of recognized devices, a list of determined device(s), or a selection menu through the screen of the electronic device 300. For example, when a plurality of data providing devices are recognized through the communication module 310, a selection menu for the plurality of data providing devices may be provided to a user. For example, when a priority of a plurality of data providing devices is determined, the electronic device 300 may automatically determine at least one data providing device but may allow a selection menu including (or not including) priority information to be provided to a user.

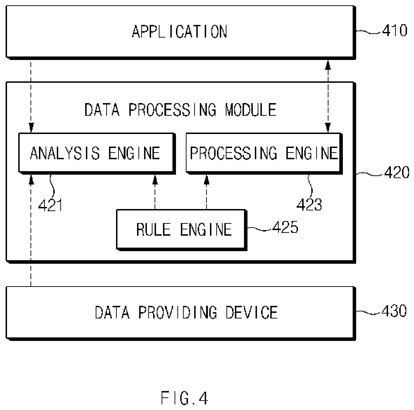

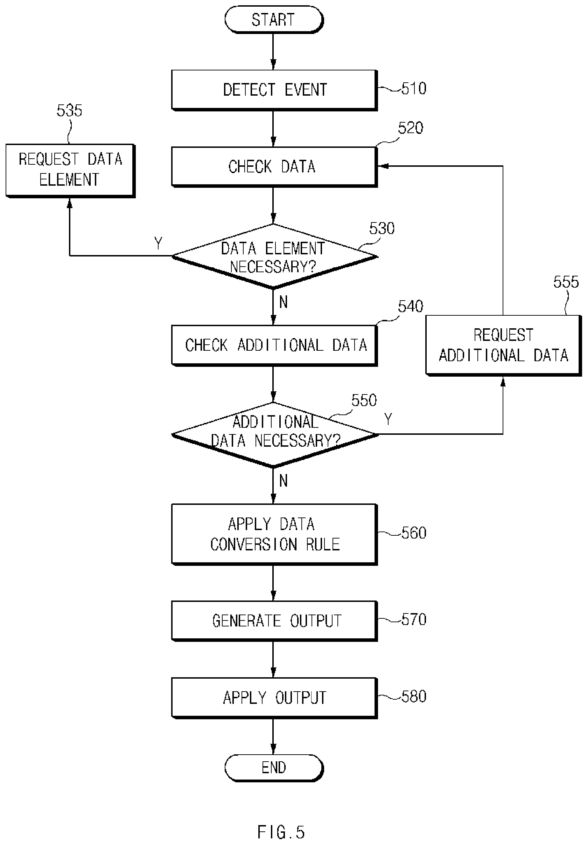

Once the device determination module 323 determines a data providing device in order to obtain data, data may be received from a corresponding device through the communication module 310. This includes the case that data is obtained through a sensor mounted within the electronic device 300. The data processing module 325 may process or treat obtained data to match the type or availability of data and may provide the processed data to a user through a display module (not shown). When at least one data providing device is determined by the device determination module 323, the electronic device 300 may receive data from the determined data providing device through the communication module 310. The data processing module 325 may process the obtained data. Data processing will be described with reference to FIGS. 4 and 5.

FIG. 4 is a conceptual diagram of an electronic device for data processing according to various embodiments of the present disclosure.

Referring to FIG. 4, an electronic device (e.g., the electronic device 101, the electronic device 200, or the electronic device 300) performing data processing according to various embodiments of the present disclosure may include a data processing module 420 (e.g., the control module 320 or the data processing module 325). The data processing module 420 may receive data from an application 410 (e.g., an application of an external device) inside or outside the electronic device. Additionally, the electronic device may receive data from a data providing device 430. The data providing device 430 may be disposed inside the electronic device in order for data processing, may be included in an arbitrary electronic device disposed outside the electronic device, or may exist as an independent device.

According to an embodiment of the present disclosure, the data processing module 420 may include at least one of an analysis engine 421, a processing engine 423, or a rule engine 425. Additionally, the analysis engine 421 may receive data from the application 410 or the data providing device 430. In various embodiments of the present disclosure, the application 410 may collect information from a sensor included inside an electronic device performing data processing and may provide the information to the data processing module 420. Alternatively, the application 410 may provide to the data processing module 420 data (e.g., a heart rate numerical value based on a heart rate waveform) based on information (e.g., a heart rate waveform received from an external device) received from an external device of the electronic device.

In an embodiment of the present disclosure, the processing engine 423 may convert data received from a data source into an appropriate format. In various embodiments of the present disclosure, when an initial data format is not an appropriate format to be displayed or provided to a user, for example, when heart rate data received from an HRM sensor is received as a kind of a waveform, the processing engine 423 may express the heart rate as a numerical value or may process the heart rate to express the heart rate as high/intermediate/low or normal/abnormal, by analyzing the received waveform. The processing engine 423 may display a conversion result through a display module (not shown) or may provide a processing result to the application 410. In the above-mentioned embodiment, even when heart rate data is provided as a numerical value (e.g., when waveform data is primarily processed by the application 410), from the point of view of general users with not high medical knowledge, a guide such as normal/abnormal, or appropriate/inappropriate may be more effective than data expressed in numbers. The analysis engine 421 may determine whether an obtained numerical value is appropriate and the processing engine 423 may process data into an appropriate format to be provided to a user.

In various embodiments of the present disclosure, the rule engine 425 may include rules applicable when analyzing or processing obtained data. For example, the rule engine 425 may include a rule for determining a heart rate 60 to 80 beats per minute as a normal heart rate. In an embodiment of the present disclosure, the rule engine 425 may apply different rules when analyzing or processing data according to an application being executed currently in the electronic device 300 or a situation of the electronic device 300. For example, when an application being executed currently is an aerobic exercise application, the rule engine 425 may include a rule for determining a heart rate of more than 100 beats per minute as a good heart rate or a rule for determining the case that a heart rate of more than 100 beats per minute and lasting for more than 10 minutes as a good exercise.

FIG. 5 is a flowchart illustrating a data processing processor according to various embodiments of the present disclosure.

Referring to FIG. 5, an electronic device may detect a specified event in operation 510. For example, when a user inputs an exercise completion after exercising for 30 minutes (e.g., a treadmill machine) or an exercise state is not detected for a predetermined time (e.g., 5 minutes), the electronic device may detect a user input (e.g., an exercise completion) or a state of an exercise completion (e.g., when exercise data is not received for 5 minutes) as one event.

In operation 520, the electronic device may check data currently available for the electronic device in correspondence to the detected event. For example, although data relating to exercise is obtained from an external device (e.g., a treadmill machine or an electronic shoes) or a specified application (e.g., S-health), all or part of the obtained data may be stored in the electronic device or the obtained data may not be stored in the electronic device at all. The electronic device may check data for performing subsequent processes (e.g., operations 530, 540, 560, 570 and 580) in response to the detected event (e.g., an exercise completion). In various embodiments of the present disclosure, the electronic device may check data currently available in the electronic device among various data elements (or parameters), for example, data elements such as an exercise start time, an exercise end time, the maximum heart rate, an average heart rate, and a total heart rate during an exercise time.

In operation 530, the electronic device may determine whether a data parameter is necessary according to a data confirmation result. For example, the electronic device may check a data parameter for determining whether an exercise process is performed normally according to a specified application (e.g., whether a target heart rate is maintained for more than 10 minutes) and if necessary, may proceed to operation 535 to request a corresponding data element from an external device (e.g., a treadmill machine or an electronic shoes) or a specified application (e.g., S-health).

In operation 540, the electronic device may check whether additional data is necessary. For example, the electronic device may request data (e.g., heart rate data for 30 minutes), that is, an analysis target, from an external device in order to analyze data according to a rule stored in the rule engine 425. In various embodiments of the present disclosure, when additional data is necessary in operation 550, the electronic device may proceed to operation 555 to request additional data from an external device or an application and obtain corresponding data. When requesting data from an external device, the electronic device may use a method such as a query structure with a specified format or an arbitrary function call. For example, the electronic device may transmit a message or a packet including the query structure or the function call to the external device or the external or internal application.

A configuration for checking data by an electronic device (e.g., operation 520) and requesting necessary data (elements) from an external device or an application (e.g., operations 530, 540, 550 and 555) has the following advantages. For example, although data elements such as an exercise start time, an exercise end time, and the maximum heart rate are simple and invariant values not requiring a complex calculation or accumulated data, in order to obtain data elements for maintaining a target heart rate (e.g., 100 beats/min) for a specified time (e.g., 30 minutes), overload may occur in the data processing module 420 or a data storage (not shown). In the above embodiment of the present disclosure, after all heart rate data during the time that a user exercises is received and stored, whether a heart rate of more than a predetermined reference is maintained for more than 30 minutes needs to be analyzed over the entire exercise time. Additionally, the data processing module 420 may need to have a logic for performing such an analysis and a storage space. As the type of data processed by an electronic device and result values provided to a user become more diversified, overload occurring as the electronic device performs an operation directly may be increased exponentially and may act as obstacles in performing general functions of the electronic device. In various embodiments of the present disclosure, the electronic device distributes an operation execution to an external device or another application and provides an appropriate result or information based on the operation, thereby allowing a system resource to be utilized effectively.

In operation 560, a data conversion rule (e.g., a rule stored in the rule engine 425) may be applied to data obtained through operations 520, 530, 540, 555 and 555 and an output to be provided to a user may be generated in operation 570. For example, according to an execution result of operation 560, the electronic device may generate as an output (e.g., visualized information) a change in heart rate during an exercise time, whether a target that an application provides is achieved (e.g., maintaining the heart rate of 100 beats per minute for 30 minutes), and an effect due to exercise (e.g., 200 kcal consumption) in operation 570. In operation 580, the electronic device may apply the output (e.g., provide the output to a display module (not shown) to be displayed on a screen).

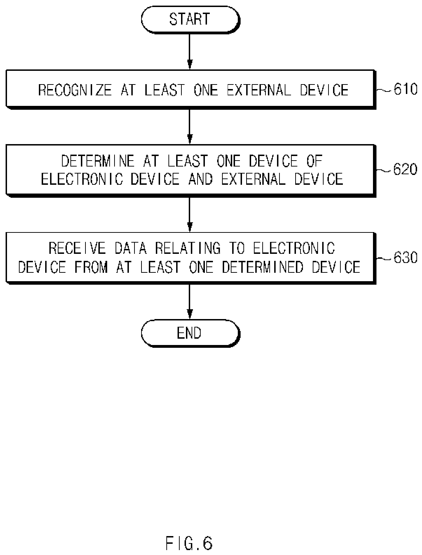

FIG. 6 is a flowchart illustrating a process for selecting a data source according to various embodiments of the present disclosure. In the description below, a content corresponding or similar to the above-mentioned content is omitted.

Referring to FIG. 6, in operation 610, an electronic device (e.g., the electronic device 101, the electronic device 200, or the electronic device 300) may recognize at least one external device (e.g., the data providing devices 103, 105, and 107, or the external device 204) communicating with the electronic device. In various embodiments of the present disclosure, a recognition operation may be performed at the same time on a module in the electronic device and external devices according to the type of data that the electronic device is to obtain or a user's request. For example, when data is to be obtained from a pedometer, the electronic device may search for all recognizable devices (e.g., an independent pedometer or a device equipped with a pedometer and capable of transmitting measurement data) capable of providing measurement data by the pedometer through an internal communication of the electronic device or an external communication in wired/wireless connection. In various embodiments of the present disclosure, the recognition operation may be sequentially performed according to the type of data or a user's request. For example, the electronic device may recognize a first heart rate sensor (e.g., connect a cable) and may then recognize a second heart rate sensor after releasing the connection with the first heart rate sensor. During this process, specification information, authentication information, or context information on a sensor (e.g., the remaining battery power and wearing information on each sensor) may be obtained from each sensor (e.g., operation 620).

In operation 620, the electronic device may determine at least one device on the basis of the obtained various information. For example, on the basis of at least one of a user's wearing state and authentication information corresponding to at least one external device, an electronic device may determine at least one device from the group including the electronic device and the at least one external device. The information may include specifications of each device, for example, the manufacturer, date of manufacture, hardware information, firmware or OS/application version, data error rate, and data reliability of each device. If a data providing device is a device including a sensor internally, the electronic device may obtain the manufacturer, date of manufacture, hardware, information, data error rate, and data reliability of the internally included sensor and/or specification information on a corresponding data providing device.

In various embodiments of the present disclosure, the electronic device may obtain context information together with specification information. For example, the electronic device may obtain information on a power state of a device corresponding to a data source. The information on a power state may include information on how much remaining battery power of each device is left (e.g., the remaining percentage of the entire battery capacity, the current remaining capacity of a battery (e.g., about 1200 mAh remaining in a battery of the total 3000 mAh), an available time during which a data providing device stands by on the basis of the current battery state, and an available time during which a data providing device is operable on the basis of the current battery state. Additionally, an electronic device may determine whether a data providing device is currently in a charging state on the basis of information relating to a power state. For example, by detecting the direction of current toward the battery of a data providing device or obtaining related information, the electronic device may determine that the battery is in a charging state when the direction of the current is in an in state and may determine that the battery is not in a charging state when the direction of the current is in an out state.

In various embodiments of the present disclosure, context information may be information relating to a network connection state. The information on a network connection state may include whether an electronic device and a data source are connected to each other through an internal communication bus (e.g., the bus 110), whether they are connected to each other through wired connection (e.g., local area network (LAN) or USB port), and whether they are connected to each other through wireless connection (e.g., BT, Wi-Fi, NFC, and cellular network). Additionally, the information on a network connection state may include information on a bandwidth of a connection (e.g., a frequency band in use or a communication channel in use) and information on the intensity of a connection signal (e.g., RSSI) in addition to the above-mentioned connection type.

In various embodiments of the present disclosure, various information such as detachment information on an external device, motion information on a user, and information relating to the approval or correction of an external device in addition to the above-mentioned information may be utilized for determining a data source.

In various embodiments of the present disclosure, the electronic device may determine at least one data providing device as a data source. There may typically only be a single determined data source: however, certain embodiments are contemplated where at least two data sources are determined according to the type of data (e.g., data including left/right or main-sub data), a user selection, or a device setting (e.g., data reception from at least two data sources in preparation that connection is terminated unexpectedly).

In various embodiments of the present disclosure, the electronic device may determine a priority for a plurality of data providing devices by using information received from at least an external device. For example, the electronic device may determine a priority of a data providing device by the order of high remaining battery power, the order of low data error rate, or a combination of at least two parameters. Additionally, the electronic device may score each of a plurality of data providing devices by giving a weight to each parameter and may then determine a priority on the basis of the score.

In various embodiments of the present disclosure, the electronic device may determine a data source according to a priority (e.g., the order of high priority). Additionally, in various embodiments of the present disclosure, the electronic device may provide a selection menu for a plurality of recognized data providing devices to a user through a display device (e.g., a screen). The selection menu may include information on the determined priority or provide some specifications (e.g., data reliability) of each data providing device together. The electronic device may determine a data providing device for providing data on the basis of a user response (e.g., a user input) for the selection menu.

In operation 630, the electronic device may obtain data relating to the electronic device through the at least one determined device. The obtained data may be analyzed and processed by the data processing module 420, for example. In various embodiments of the present disclosure, the electronic device may check a user's wearing state or a power state for at least one device. The checking may be performed periodically, arbitrarily, or when a specified event occurs. In various embodiments of the present disclosure, the electronic device may stop data reception from at least one device on the basis of the wearing state or the power state (e.g., when a wearing state is poor or the battery is running low). In various embodiments of the present disclosure, when the electronic device stops data reception from the at least one device, the electronic device may receive data by using another electronic device other than at least one device stopping data reception among the electronic device and an external device.

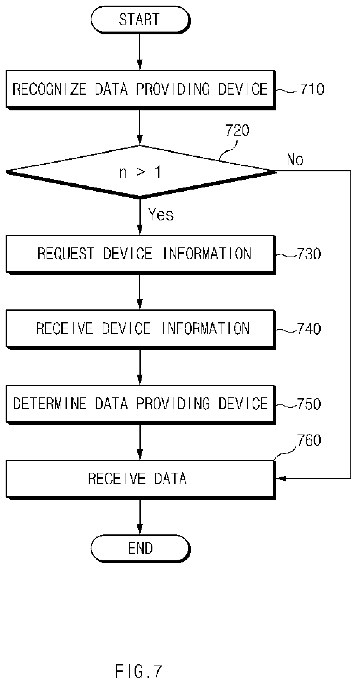

FIG. 7 is a flowchart illustrating a process for selecting a data source according to various embodiments of the present disclosure.

Referring to FIG. 7, an electronic device (e.g., the electronic device 101) may start a process for recognizing a data providing device in operation 710. For example, when a user executes a specified application (e.g., a health application) of an electronic device or a device recognition command is inputted from a user, the process may start.

In operation 720, the electronic device may determine the number of recognized data providing devices. If the number of recognized devices is one (e.g., n=1), the electronic device may proceed to operation 760 to receive data from the recognized device. If the number of recognized devices is at least two (e.g., n>1, n is an integer), the electronic device may proceed to operation 730 to request information necessary for data source determination from each data providing device.

In operation 730, the electronic device may request information necessary for data source determination from a data providing device. For example, an electronic device may request information (e.g., specification information and context information) for determining from which one of more than two data providing devices data is received. In various embodiments of the present disclosure, when two data sources (e.g., a left sensor and a right sensor) are required, an electronic device may request information for determining how to match data provided from which data providing device to which data (e.g., left data and right data).

The electronic device may receive device information (e.g., specification information and context information) according to a request from each data providing device in operation 740 and may determine a data providing device utilized as a data source in operation 750. In operation 760, the first electronic device may receive data from the data providing device.

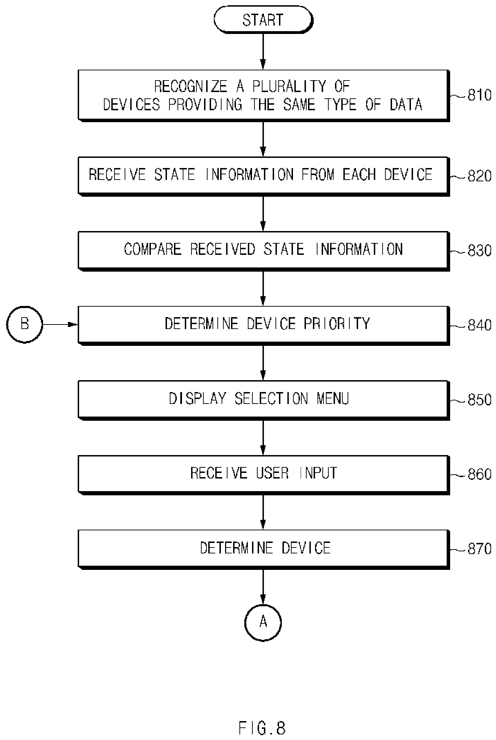

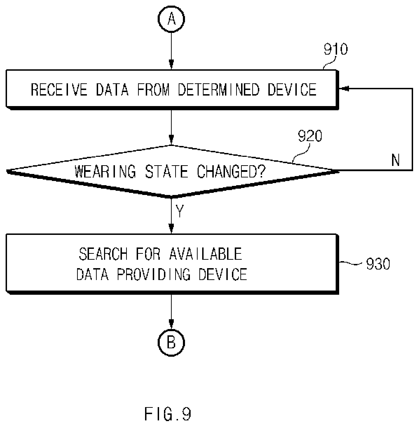

FIGS. 8 and 9 are flowcharts illustrating a process for determining and changing a data providing device according to various embodiments of the present disclosure. In more detail, FIG. 8 is a flowchart illustrating a user input process for determining a data providing device according to various embodiments of the present disclosure. FIG. 9 is flowchart illustrating a process for changing a data providing device according to various embodiments of the present disclosure. In the description below, a content overlapping with or similar to the above-mentioned content is omitted.

Referring to FIG. 8, an electronic device may recognize a plurality of data providing devices providing the same type of data in operation 810. In operation 820, the electronic device may receive various information, for example, state information, for data source determination from each data providing device, simultaneously or sequentially with the recognition in operation 810, or by a separate operation.

In operation 830, the electronic device may compare information (e.g., state information) obtained from each device. The obtained information may include the above-mentioned specification information, authentication information, wearing information, and context (environment) information.

In operation 840, the electronic device may determine a priority of the plurality of data providing devices on the basis of the obtained information. As mentioned above, the electronic device may determine a priority by applying criteria, rules, and weights to various parameters. In an embodiment of the present disclosure, once the priority is determined, an electronic device may automatically determine a data providing device according to a priority. In such a case, the process may proceed directly from operation 840 to operation 870, omitting operations 850 and 860.

In operation 850, the electronic device may provide a selection menu for the plurality of data providing devices to a user through a display device (e.g., a screen). The selection menu may include information on the determined priority or provide some specifications (e.g., data reliability) of each data providing device together.

In operation 860, the electronic device may receive a user input for the selection menu. In operation 870, a data providing device may be determined on the basis of the user input or automatically. The following process A will be described with reference to FIG. 9.

FIG. 9 is a flowchart illustrating a change of a data providing device depending on a wearing state change according to various embodiments of the present disclosure.

Referring to FIG. 9, the electronic device may obtain data from the determined device (e.g., determined in operation 870) through a sensor. In the disclosed content in this specification, like the above-mentioned specification information, environment information, context information, and wearing state information, information or data used for determining at least one data providing device may be understood as situation information data. Data (or information) measured or processed by a sensor and provided from a data providing device determined based on at least situation information data (or determined based on situation information and a user selection) may be understood as actual measurement data.

In operation 910, the electronic device may obtain actual measurement data. In various embodiments of the present disclosure, the electronic device may obtain situation information data periodically or arbitrarily while obtaining actual measurement data. For example, in the case that it is important for equipment (e.g., medical equipment and precision testing equipment) to quickly recognize changing situation information, a reception period of situation information data may be set relatively short. Such a period may be adjusted by the electronic device or a user input. In various embodiments of the present disclosure, for various purposes such as reducing the battery consumption, situation information may be received through a notification function. For example, when the remaining battery capacity is reduced to lower than 30%, the electronic device may provide a notification. Simultaneously with the notification, or according to a user input corresponding to the notification, the electronic device may obtain situation information data relating to data providing devices (e.g., the sensor 180, the data providing devices 103, 105, 107, 201, 202, and 203, the external device 204, or the sensor 205 in the external device 205) capable of providing actual measurement data.

In operation 920, a determination is made on whether a wearing state of a device providing data is changed. If the wearing state is not changed, the electronic device may obtain data continuously in operation 910.

When it is determined in operation 920 that the wearing state is changed, the electronic device proceeds to operation 930. In operation 930, the electronic device may search for an available data providing device. The following process B may correspond to operations 840, 850, 860 and 870 described above with reference to FIG. 8. For example, the electronic device may determine a priority of a newly found data providing device (e.g., operation 840 e.g., operation 860), thereby newly determining a device to receive data therefrom (e.g., operation 870). When the electronic device performs the process described with reference to FIG. 9, a device previously receiving data may be excluded. For example, even when the device previously receiving data is found in operation 930, a priority determination operation (e.g., operation 840) may be excluded.

According to various embodiments of the present disclosure, a method of determining a data providing device includes: recognizing a plurality of data providing devices inside or outside an electronic device; receiving information relating to the plurality of data providing devices; determining at least one data providing device in order to receive data on the basis of at least the received information; and receiving the data from the determined data providing device.

In various embodiments of the present disclosure, the receiving of the information includes receiving a specification of each device from the plurality of data providing devices. The specification may include at least one of the manufacturer, date of manufacture, hardware information, data error rate, and data reliability of the each device.

In various embodiments of the present disclosure, the receiving of the information may include receiving information on a power state of each device from the plurality of data providing devices. Additionally, the information on a power state may include information on the battery remaining capacity or whether charging is made of the each device.

In various embodiments of the present disclosure, the receiving of the information may include receiving information on a network connection state between the electronic device and the plurality of data providing devices. Additionally, the information on a network connection state may include at least one of a connection type, a connection bandwidth, and the intensity of signal between the electronic device and each of the plurality of data providing devices.

In various embodiments of the present disclosure, the determining of the data providing device may include: determining a priority of the plurality of data providing devices on the basis of the received information; and determining a data providing device for providing the data.

In various embodiments of the present disclosure, the determining of the data providing device may include: providing a selection menu of the plurality of data providing devices to a user; and on the basis of a user input for the selection menu, determining a data providing device for providing the data.

In various embodiments of the present disclosure, the receiving of the data may include: receiving data from a device previously receiving data and the determined data providing device simultaneously; and when a specified time elapses, stopping the data reception from the device previously receiving the data.

In various embodiments of the present disclosure, the plurality of data providing devices may be an HRM sensor or a pedometer.

In various embodiments of the present disclosure, a method of determining a data providing device and obtaining data may include: recognizing, by an electronic device, at least one external device communicating with the electronic device; on the basis of at least one of a user's wearing state or authentication information corresponding to the at least one external device, determining at least one device of the electronic device and the at least one external device; and obtaining, by the electronic device, data relating to the electronic device through the at least one device.

In various embodiments of the present disclosure, the wearing state may include at least one of detachment information on a user of the at least one external device and motion information on the user.

In various embodiments of the present disclosure, the authentication information may include at least one of approval related information on the external device and correction related information.

In various embodiments of the present disclosure, the determining of the at least one device may include determining the at least one device on the further basis of a power state on the at least one external device.

In various embodiments of the present disclosure, the determining of the at least one device may include determining the at least one device on the further basis of a user's wearing state or authentication information corresponding to the electronic device.

In various embodiments of the present disclosure, the determining of the at least one device may include: determining a priority of the plurality of data providing devices on the basis of the information; and determining a data providing device for providing the data in correspondence to the priority.

In various embodiments of the present disclosure, the determining of the at least one device may include: determining a priority of the plurality of data providing devices on the basis of the information; and determining a data providing device for providing the data in correspondence to the priority.

In various embodiments of the present disclosure, the obtaining of the data may include checking a user's wearing state or a power state for the at least one device.

In various embodiments of the present disclosure, the obtaining of the data may include stopping data acquisition from the at least one device on the basis of a user's wearing state or a power state for the at least one device.

In various embodiments of the present disclosure, the stopping of the data acquisition may include obtaining the data by using another electronic device other than the at least one device among the electronic device and the at least one external device.

FIG. 10 is a block diagram illustrating a hardware configuration of an electronic device according to various embodiments of the present disclosure.

Referring to FIG. 10, an electronic device 1001, for example, may configure all or part of the above-mentioned electronic device 101 shown in FIG. 1.

The electronic device 1000 includes at least one of at least one application processor (AP) 1010, a communication module 1020, a subscriber identification module (SIM) card 1024, a memory 1030, a sensor module 1040, an input device 1050, a display 1060, an interface 1070, an audio module 1080, a camera module 1091, a power management module 1095, a battery 1096, an indicator 1097, and a motor 1098.

The AP 1010 (e.g., the control module 320) may control a plurality of hardware or software components connected to the AP 1010 and also may perform various data processing and operations with multimedia data by executing an operating system or an application program. The AP 1010 may be implemented with a system on chip (SoC), for example. According to an embodiment of the present disclosure, the AP 1010 may further include a graphic processing unit (GPU) (not shown).

The communication module 1020 (e.g., the communication interface 160 and the communication module 310) may perform data transmission through a communication between other electronic devices (e.g., the data providing devices 103, 105, and 107) connected to the electronic device 1000 (e.g., the electronic devices 101) via a network. According to an embodiment of the present disclosure, the communication module 1020 may include a cellular module 1021, a Wi-Fi module 1023, a BT module 1025, a GPS module 1027, an NFC module 1028, and a radio frequency (RF) module 1029.

The cellular module 1021 may provide voice calls, video calls, text services, or Internet services through a communication network (e.g., LTE, LTE-A, CDMA, WCDMA, UMTS, WiBro, or GSM). The cellular module 1021 may identify and authenticate an electronic device in a communication network by using a subscriber identification module (e.g., the SIM card 1024), for example. According to an embodiment of the present disclosure, the cellular module 1021 may perform at least part of a function that the AP 1010 provides. For example, the cellular module 1021 may perform at least part of a multimedia control function.

According to an embodiment of the present disclosure, the cellular module 1021 may further include a communication processor (CP). Additionally, the cellular module 1021 may be implemented with an SoC, for example. As shown in FIG. 10, components such as the cellular module 1021 (e.g., a CP), the memory 1030, or the power management module 1095 are separated from the AP 1010, but according to an embodiment of the present disclosure, the AP 1010 maybe implemented including some of the above-mentioned components (e.g., the cellular module 1021).

According to an embodiment of the present disclosure, the AP 1010 or the cellular module 1021 (e.g., a CP) may load instructions or data, which are received from a nonvolatile memory or at least one of other components connected thereto, into a volatile memory and then may process them. Furthermore, the AP 1010 or the cellular module 1021 may store data received from or generated by at least one of other components in a nonvolatile memory.

Each of the Wi-Fi module 1023, the BT module 1025, the GPS module 1027, and the NFC module 1028 may include a processor for processing data transmitted/received through a corresponding module. Although the cellular module 1021, the Wi-Fi module 1023, the BT module 1025, the GPS module 1027, and the NFC module 1028 are shown as separate blocks in FIG. 10, according to an embodiment of the present disclosure, some (e.g., at least two) of the cellular module 1021, the Wi-Fi module 1023, the BT module 1025, the GPS module 1027, and the NFC module 1028 may be included in one integrated chip (IC) or an IC package. For example, at least some processors (e.g., a CP corresponding to the cellular module 1021 and a Wi-Fi processor corresponding to the Wi-Fi module 1023) respectively corresponding to the cellular module 1021, the Wi-Fi module 1023, the BT module 1025, the GPS module 1027, and the NFC module 1028 may be implemented with a single SoC.

The RF module 1029 may be responsible for data transmission/reception, for example, the transmission/reception of an RF signal. Although not shown in the drawings, the RF module 1029 may include a transceiver, a power amp module (PAM), a frequency filter, or a low noise amplifier (LNA). Additionally, the RF module 1029 may further include components for transmitting/receiving electromagnetic waves in a free space as a wireless communication, for example, conductors or conducting wires. Although the cellular module 1021, the Wi-Fi module 1023, the BT module 1025, the GPS module 1027, and the NFC module 1028 share one RF module 1029 shown in FIG. 10, according to an embodiment, at least one of the cellular module 1021, the Wi-Fi module 1023, the BT module 1025, the GPS module 1027, and the NFC module 1028 may perform the transmission/reception of an RF signal through an additional RF module.

The SIM card 1024 may be a card including a SIM and may be inserted into a slot formed at a specific location of an electronic device. The SIM card 1024 may include unique identification information (e.g., an integrated circuit card identifier (ICCID)) or subscriber information (e.g., an international mobile subscriber identity (IMSI)).

The memory 1030 (e.g., the memory 130) may include an internal memory 1032 or an external memory 1034. The internal memory 1032 may include at least one of a volatile memory (e.g., dynamic random access memory (DRAM), static RAM (SRAM), synchronous DRAM (SDRAM)) and a non-volatile memory (e.g., one time programmable read only memory (OTPROM), PROM, erasable and programmable ROM (EPROM), electrically erasable and programmable ROM (EEPROM), mask ROM, flash ROM, Not AND (NAND) flash memory, and Not OR (NOR) flash memory).

According to an embodiment of the present disclosure, the internal memory 1032 may be a Solid State Drive (SSD). The external memory 1034 may further include flash drive, for example, compact flash (CF), secure digital (SD), Micro-SD, Mini-SD, extreme digital (xD), or a memory stick. The external memory 1034 may be functionally connected to the electronic device 1000 through various interfaces. According to an embodiment of the present disclosure, the electronic device 1000 may further include a storage device (or a storage medium) such as a hard drive.

The sensor module 1040 (e.g., the sensor 180) measures physical quantities or detects an operating state of the electronic device 1000, thereby converting the measured or detected information into electrical signals. The sensor module 1040 may include at least one of a gesture sensor 1040A, a gyro sensor 1040B, a pressure sensor 1040C, a magnetic sensor 1040D, an acceleration sensor 1040E, a grip sensor 1040F, a proximity sensor 1040G, a color sensor 1040H (e.g., a red, green, blue (RGB) sensor), a bio sensor 10401, a temperature/humidity sensor 1040J, an illumination sensor 1040K, and a UV sensor 1040M. Although not shown in the drawing, additionally or alternatively, the sensor module 1040 may include an E-nose sensor (not shown), an electromyography (EMG) sensor, an electroencephalogram (EEG) sensor (not shown), an electrocardiogram (ECG) sensor (not shown), an infrared (IR) sensor (not shown), an iris sensor (not shown), or a fingerprint sensor (not shown). The sensor module 1040 may further include a control circuit for controlling at least one sensor therein.

According to an embodiment of the present disclosure, the sensor module 1040 may include various medical sensors in order to receive or provide information relating to the health of a user of the electronic device 1000 (e.g., the electronic device 101) For example, the sensor module 1040 may include a photoplethysmography (PPG) sensor. The PPG sensor may be attached to a portion such as a finger, a wrist, or a chest where a blood vessel passes and an appropriate contact for measurement occurs to sense information such as pulse wave, heart rate, or oxygen saturation (e.g., Peripheral capillary oxygen saturation (SPO2)). According to an embodiment of the present disclosure, the sensor module 1040 may include an ECG sensor. The ECG sensor may contact a portion of a finger, a palm, or a sole where an electrode contacts easily to obtain information such as heart rate or ECG. The electronic device 1000 may obtain heart rate or oxygen saturation through a PPG sensor or an ECG sensor while a user sleeps, when stress occurs, or while a user exercises to determine a user's health state or emergency state.

According to an embodiment of the present disclosure, the sensor module 1040 may include an EEG sensor. The EEG sensor may contact an appropriate portion, where an electrode contacts appropriately, such as a head, a forehead, or a temple close to a brain to obtain brainwave information. The electronic device 1000 may determine a user's sleep state, stress state, and mode through the EEG sensor.

According to an embodiment of the present disclosure, the sensor module 1040 may include a skin sensor such as a skin temperature sensor or a skin impedance sensor. The skin sensor may contact a portion where an electrode contacts easily to measure a temperature, a skin temperature at a measurement point (by using the skin temperature sensor), or a skin moisture level (by using the skin impedance sensor). The electronic device 100 may use data received through the skin sensor to provide service such as skin care.

According to an embodiment of the present disclosure, the sensor module 1040 may include a body fat impedance sensor. The body fat impedance sensor may contact a portion such as a finger, a palm, or a sole where an electrode contacts easily. The body fat impedance sensor may measure the body fat of a measurement target (e.g., a user).

According to an embodiment of the present disclosure, the sensor module 1040 may include a galvanic skin response (GSR) sensor or a human flux (HF) sensor. The GSR or HF sensor may contact an appropriate portion of a skin where an electrode contacts easily. When the secretion of sweat is increased due to the increase in human body's activity, conductivity may be increased but resistance may be decreased. In this case, a low galvanic skin resistance obtained through the GSR sensor may represent a tense state and a high galvanic skin resistance may represent a relatively relaxed state. Additionally, the HF sensor may detect a rate at which heat flows by comparing the temperatures of two points of a skin to obtain a temperature difference. The GSR and/or the HF sensor may be used to obtain a state such as a sleep state and a stress state.

According to an embodiment of the present disclosure, the sensor module 1040 may include a blood glucose measurement sensor. The blood glucose measurement sensor may include various sensors through a blood collection method, a reverse osmosis method, and an electrochemical measurement method. Blood glucose may be used to obtain a user's blood glucose level periodically or non-periodically.

The input module 1050 may include a touch panel 1052, a (digital) pen sensor 1054, a key 1056, or an ultrasonic input device 1058. The touch panel 1052 may recognize a touch input through at least one of capacitive, resistive, infrared, or ultrasonic methods, for example. Additionally, the touch panel 1052 may further include a control circuit. In the case of the capacitive method, both direct touch and proximity recognition are possible. The touch panel 1052 may further include a tactile layer. In this case, the touch panel 1052 may provide a tactile response to a user.

The (digital) pen sensor 1054 may be implemented through a method similar or identical to that of receiving a user's touch input or an additional sheet for recognition. The key 1056 may include a physical button, a touch key, an optical key, or a keypad, for example. The ultrasonic input device 1058, as a device checking data by detecting sound waves through a mic (e.g., a mic 1088) in the electronic device 1000, may provide wireless recognition through an input tool generating ultrasonic signals. According to an embodiment of the present disclosure, the electronic device 1000 may receive a user input from an external device (e.g., a computer or a server) connected to the electronic device 1000 through the communication module 1020.

The display 1060 (e.g., the display 150) may include a panel 1062, a hologram device 1064, or a projector 1066. The panel 1062 may include a liquid-crystal display (LCD) or an active-matrix organic light-emitting diode (AM-OLED). The panel 1062 may be implemented to be flexible, transparent, or wearable, for example. The panel 1062 and the touch panel 1052 may be configured with one module. The hologram 1064 may show three-dimensional images in the air by using the interference of light. The projector 1066 may display an image by projecting light on a screen. The screen, for example, may be placed inside or outside the electronic device 1000. According to an embodiment of the present disclosure, the display 1060 may further include a control circuit for controlling the panel 1062, the hologram device 1064, or the projector 1066.

The interface 1070 may include an HDMI 1072, a USB 1074, an optical interface 1076, or a D-subminiature (D-sub) 1078, for example. The interface 1070 may be included in the communication interface 160 shown in FIG. 1, for example. Additionally or alternatively, the interface 1070 may include a mobile high-definition link (MHL) interface, an SD card/multimedia card (MMC) interface, or an infrared data association (IrDA) standard interface.

The audio module 1080 may convert sound into electrical signals and convert electrical signals into sounds. At least some components of the audio module 1080 may be included in the input/output interface 140 shown in FIG. 1, for example. The audio module 1080 may process sound information inputted/outputted through a speaker 1082, a receiver 1084, an earphone 1086, or a mic 1088.

The camera module 1091, as a device for capturing a still image and a video, may include at least one image sensor (e.g., a front sensor or a rear sensor), a lens (not shown), an image signal processor (ISP) (not shown), or a flash (not shown) (e.g., an LED or a xenon lamp).

The power management module 1095 may manage the power of the electronic device 1000. Although not shown in the drawings, the power management module 1095 may include a power management IC (PMIC), a charger IC, or a battery or fuel gauge, for example.

The PMIC may be built in an IC or SoC semiconductor, for example. A charging method may be classified into a wired method and a wireless method. The charger IC may charge a battery and may prevent overvoltage or overcurrent flow from a charger. According to an embodiment of the present disclosure, the charger IC may include a charger IC for at least one of a wired charging method and a wireless charging method. As the wireless charging method, for example, there is a magnetic resonance method, a magnetic induction method, or an electromagnetic method. An additional circuit for wireless charging, for example, a circuit such as a coil loop, a resonant circuit, or a rectifier circuit, may be added.

The battery gauge may measure the remaining amount of the battery 1096, or a voltage, current, or temperature of the battery 1096 during charging. The battery 1096 may store or generate electricity and may supply power to the electronic device 1000 by using the stored or generated electricity. The battery 1096, for example, may include a rechargeable battery or a solar battery.

The indicator 1097 may display a specific state of the electronic device 1000 or part thereof (e.g., the AP 1010), for example, a booting state, a message state, or a charging state. The motor 1098 may convert electrical signals into mechanical vibration. Although not shown in the drawings, the electronic device 1000 may include a processing device (e.g., a GPU) for mobile TV support. A processing device for mobile TV support may process media data according to the standards such as digital multimedia broadcasting (DMB), digital video broadcasting (DVB), or media flow.

Each of the above-mentioned components of the electronic device according to various embodiments of the present disclosure may be configured with at least one component and the name of a corresponding component may vary according to the kind of an electronic device. An electronic device according to various embodiments of the present disclosure may include at least one of the above-mentioned components, may not include some of the above-mentioned components, or may further include another component. Additionally, some of components in an electronic device according to various embodiments of the present disclosure are configured as one entity, so that functions of previous corresponding components are performed identically.

The term "module" used in this disclosure, for example, may mean a unit including a combination of at least one of hardware, software, and firmware. The term "module" and the term "unit", "logic", "logical block", "component", or "circuit" may be interchangeably used. A "module" may be a minimum unit or part of an integrally configured component. A "module" may be a minimum unit performing at least one function or part thereof. A "module" may be implemented mechanically or electronically. For example, a "module" according to various embodiments of the present disclosure may include at least one of an application-specific IC (ASIC) chip performing certain operations, field-programmable gate arrays (FPGAs), or a programmable-logic device, all of which are known or to be developed in the future.

According to various embodiments of the present disclosure, an electronic device may include: a device recognition module recognizing a plurality of data providing devices inside or outside the electronic device; a communication module communicating with the plurality of data providing devices and receiving information relating to each device; and a device determination module determining at least one data providing device in order to receive data on the basis of at least the received information.

In various embodiments of the present disclosure, the communication module may be set to receive the data from the determined data providing device and when the data providing device is changed, may be set to simultaneously receive data from the data providing device before the change and a data providing device after the change for a specified time.

In various embodiments of the present disclosure, the electronic device may further include a display module; the display module may be set to provide a selection menu for the plurality of data providing devices; and the device determination module may be set to determine the data providing device according to a user response for the selection menu.

In various embodiments of the present disclosure, the electronic device may further include a data processing module; and the data processing module may be set to output data received from the determined data providing device to a user.

In various embodiments of the present disclosure, information relating to the each device may include at least one of specification of each of the plurality of data providing devices, information on a power state, and network connection state information.

In various embodiments of the present disclosure, an electronic device determining a data providing device and obtaining data may include: a communication module for communicating with at least one external device; and a control module functionally connected to the communication module. The control module may be set to recognize the at least one external device, determine at least one device of the electronic device and the at least one external device on the basis of at least one of a user's wearing state or authentication information corresponding to the at least one external device, and obtain data relating to the electronic device through the at least one device.

In various embodiments of the present disclosure, the at least one external device may include at least one of a biological information sensor, a physical information sensor, and a medical information sensor.

In various embodiments of the present disclosure, the control module may be set to check a user's wearing state including at least one of detachment information on a user of the at least one external device and motion information on the user.

In various embodiments of the present disclosure, the control module may be set to check authentication information including at least one of approval related information on the external device and correction related information.

In various embodiments of the present disclosure, the control module may be set to further check a power state on the at least one external device.

In various embodiments of the present disclosure, the control module may be set to determine the at least one device on the further basis of a user's wearing state or authentication information corresponding to the electronic device.

In various embodiments of the present disclosure, the control module may be set to use the data through at least one application.

In various embodiments of the present disclosure, the control module may be set to process the data on the basis of a rule where at least one of a data parsing method or a data processing method is specified.

In various embodiments of the present disclosure, the control module may be set to generate a rule for processing data obtained through the at least one external device on the basis of a recognition of the at least one external device.

According to various embodiments of the present disclosure, at least part of a device (e.g., modules or functions thereof) or a method (e.g., operations) according to this disclosure, for example, as in a form of a programming module, may be implemented using an instruction stored in computer-readable storage media. When at least one processor (e.g., the processor 1010) executes an instruction, the processor may perform a function corresponding to the instruction. The non-transitory computer-readable storage media may include the memory 1020, for example. At least part of a programming module may be implemented (e.g., executed) by processor 1010, for example. At least part of a programming module may include a module, a program, a routine, sets of instructions, or a process to perform at least one function, for example.

The non-transitory computer-readable storage media may include Magnetic Media such as a hard disk, a floppy disk, and a magnetic tape, Optical Media such as Compact Disc ROM (CD-ROM) and DVD, Magneto-Optical Media such as Floptical Disk, and a hardware device especially configured to store and perform a program instruction (e.g., a programming module) such as ROM, RAM, and flash memory. Additionally, a program instruction may include high-level language code executable by a computer using an interpreter in addition to machine code created by a complier. The hardware device may be configured to operate as at least one software module to perform an operation of this disclosure and vice versa.

In various embodiments of the present disclosure, the recording media may be computer readable media having a program recorded thereon, which implements: recognizing at least one external device communicating with the electronic device; receiving a user's wearing state or authentication information corresponding to the at least one external device; on the basis of at least the user's wearing state or the authentication information, determining at least one device of the electronic device and the at least one external device; and obtaining, by the electronic device, data relating to the electronic device through the at least one device.

In various embodiments of the present disclosure, the recording media may record a program (or instructions, or code), which implements determining the at least one device on the further basis of a power state on the at least one external device, or determining the at least one device on the further basis of a user's wearing state or authentication information corresponding to the electronic device, or setting a priority of the plurality of data providing devices on the basis of the information; and determining a data providing device for providing the data in correspondence to the priority.

In various embodiments of the present disclosure, the recording media may record a program, which implements checking a user's wearing state or a power state for the at least one device, or on the basis of the user's wearing state or the power state for the at least one device, stopping data acquisition from the at least one device.

According to various embodiments of the present disclosure, on the basis of an environment of an electronic device and a data source providing data, an appropriate data providing device can be selected.

Additionally, according to various embodiments of the present disclosure, in a situation that a data providing device needs to be changed, without data interruption or data loss, the data providing device can be changed seamlessly.

A module or a programming module according to the present disclosure may include at least one of the above-mentioned components, may not include some of the above-mentioned components, or may further include another component. Operations performed by a module, a programming module, or other components according to various embodiments of the present disclosure may be executed through a sequential, parallel, repetitive or heuristic method. Additionally, some operations may be executed in a different order or may be omitted. Or, other operations may be added.

Features, integers or characteristics described in conjunction with a particular aspect, embodiment or example of the present disclosure are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the scope of the present disclosure as defined by the appended claims.

## Claims

1. A method comprising:
recognizing, by an electronic device (101; 200; 300) comprising a sensor module (1040) configured to sense data, at least one external device (103, 105, 107; 202, 203, 204) communicating with the electronic device, each of said recognized devices and the electronic device being capable of providing a same type of data;
determining whether a number of the at least one external device is greater than 1;
when the number of the at least one external device is greater than 1, setting a priority of the electronic device and the at least one external device on the basis of at least one of a user's wearing state and authentication information corresponding to the at least one external device;
determining as a data providing device (101; 200; 300) at least one device from a group including the electronic device and the at least one recognized external device (103, 105, 107; 202, 203, 204), said determination being performed on the basis of the set priority; and
obtaining, by the electronic device (101; 200; 300), data for use by the electronic device through the at least one determined device (101; 200; 300; 103, 105, 107; 202, 203, 204),
**characterized by** the method further comprising:
while obtaining the data, obtaining situation information data of the at least one determined device (101; 200; 300; 103, 105, 107; 202, 203, 204);
determining whether a wearing state of the at least one determined device (101; 200; 300; 103, 105, 107; 202, 203, 204) is changed according to the obtained situation information data; and
when the wearing state of the at least one determined device (101; 200; 300; 103, 105, 107; 202, 203, 204) is changed, resetting the priority of the electronic device (101; 200; 300) and the at least one external device (103, 105, 107; 202, 203, 204), and
wherein the wearing state comprises attachment-detachment information on the at least one external device (103, 105, 107; 202, 203, 204) for the user.

2. The method of claim 1, wherein the wearing state further comprises motion information on the user

3. The method of claim 1 or claim 2, wherein the setting of the priority comprises setting the priority of the electronic device (101; 200; 300) and the at least one external device (103, 105, 107; 202, 203, 204) on the further basis of a power state for the at least one external device (103, 105, 107; 202, 203, 204).

4. The method of claim 1, wherein the determining of the at least one device (101; 200; 300; 103, 105, 107; 202, 203, 204) comprises:
providing a selection user interface, UI, for a data providing device in conjunction with the priority; and
determining from which data providing device to obtain the data in accordance with a user input for the selection UI.

5. The method of any one of the preceding claims, further comprising stopping data acquisition from the at least one device (101; 200; 300; 103, 105, 107; 202, 203, 204) on the basis of a user's wearing state or a power state for the at least one device.

6. The method of claim 5, further comprising obtaining the data by using another electronic device other than the at least one device among the electronic device (101; 200; 300) and the at least one external device (103, 105, 107; 202, 203, 204).

7. An electronic device (200) comprising:
a communication module (230) configured to communicate with at least one external device (202, 203, 204);
a sensor module (1040) configured to sense data; and
a control module (210; 320) configured to functionally connect to the communication module and the sensor module,
wherein the control module (210; 320) is further configured:
to recognize the at least one external device (202, 203, 204), each of said recognized devices and the sensor module being capable of providing a same type of data for use by the electronic device (200),
to determine whether a number of the at least one external device (202, 203, 204) is greater than 1,
when the number of the at least one external device (202, 203, 204) is greater than 1, to set a priority of the electronic device (200) and the at least one external device (202, 203, 204) based on at least one of a user's wearing state and authentication information corresponding to the at least one external device (202, 203, 204),
to determine as a data providing device at least one device from a group including the electronic device (200) and the at least one external device (200, 300, 400), the determination being performed on the basis of the set priority, and
to obtain data for use by the electronic device (101; 200; 300) through the at least one determined device (101; 200; 300; 202, 203, 204);
**characterized by** the control module (210; 320) further being configured to:
while obtaining the data, obtain situation information data of the determined at least one device,
determine a wearing state of the determined at least one device is changed according to the obtained situation information data, and
when the wearing state of the determined at least one device is changed, reset the priority of the electronic device and the at least one external device, and
wherein the wearing state comprises attachment-detachment information on the at least one external device (202, 203, 204) for the user.

8. The electronic device of claim 7, wherein the control module (210) is further configured to use the data through at least one application.

9. The electronic device of claim 7 or claim 8, wherein the control module (210) is further configured to process the data on the basis of a rule where at least one of a data parsing method and a data processing method is specified.

10. The electronic device of any one of claims 7 to 9, wherein the control module (210) is configured to generate a rule for processing data obtained through the at least one external device (202, 203, 204) on the basis of a recognition of the at least one external device.

11. A computer readable recording medium having a program recorded thereon, the program implementing a method in accordance with any one of claims 1 to 6 when executed by an electronic device.

## Patentansprüche

1. Verfahren, umfassend:
Erkennen, durch ein elektronisches Gerät (101; 200; 300), das ein Sensormodul (1040) umfasst, das konfiguriert ist, um Daten zu erfassen, von mindestens einem externen Gerät (103, 105, 107; 202, 203, 204), das mit dem elektronischen Gerät kommuniziert, wobei jedes der erkannten Geräte und das elektronische Gerät in der Lage sind, den gleichen Datentyp bereitzustellen;
Bestimmen, ob eine Anzahl des mindestens einen externen Geräts größer als 1 ist;
wenn die Anzahl des mindestens einen externen Geräts größer als 1 ist, Festlegen einer Priorität des elektronischen Geräts und des mindestens einen externen Geräts auf der Grundlage von mindestens einer von den Tragezustands- und Authentifizierungsinformationen eines Benutzers, die dem mindestens einen externen Gerät entsprechen;
Bestimmen, als Datenbereitstellungsgerät (101; 200; 300), von mindestens einem Gerät aus einer Gruppe, die das elektronische Gerät und das mindestens eine erkannte externe Gerät (103, 105, 107; 202, 203, 204) umfasst, wobei die Bestimmung auf der Grundlage der festgelegten Priorität durchgeführt wird; und
Erhalten von Daten durch das elektronische Gerät (101; 200; 300) zur Verwendung durch das elektronische Gerät über das mindestens eine bestimmte Gerät (101; 200; 300; 103, 105, 107; 202, 203, 204), **dadurch gekennzeichnet, dass** das Verfahren ferner umfasst:
während des Erhaltens der Daten Erhalten von Situationsinformationsdaten des mindestens einen bestimmten Geräts (101; 200; 300; 103, 105, 107; 202, 203, 204);
Bestimmen, ob ein Tragezustand des mindestens einen bestimmten Geräts (101; 200; 300; 103, 105, 107; 202, 203, 204) gemäß den erhaltenen Situationsinformationsdaten geändert wird; und
wenn der Tragezustand des mindestens einen bestimmten Geräts (101; 200; 300; 103, 105, 107; 202, 203, 204) geändert wird, Rücksetzen der Priorität des elektronischen Geräts (101; 200; 300) und des mindestens einen externen Geräts (103, 105, 107; 202, 203, 204), und
wobei der Tragezustand Informationen zum Anbringen und Entfernen an dem mindestens einen externen Gerät (103, 105, 107; 202, 203, 204) für den Benutzer umfasst.

2. Verfahren nach Anspruch 1, wobei der Tragezustand ferner Bewegungsinformationen über den Benutzer umfasst.

3. Verfahren nach Anspruch 1 oder Anspruch 2, wobei das Festlegen der Priorität das Festlegen der Priorität des elektronischen Geräts (101; 200; 300) und des mindestens einen externen Geräts (103, 105, 107; 202, 203, 204) auf der weiteren Grundlage eines Energiezustands für das mindestens eine externe Gerät (103, 105, 107; 202, 203, 204) umfasst.

4. Verfahren nach Anspruch 1, wobei das Bestimmen des mindestens einen Geräts (101; 200; 300; 103, 105, 107; 202, 203, 204) umfasst:
Bereitstellen einer Auswahlbenutzeroberfläche, UI, für ein Datenbereitstellungsgerät in Verbindung mit der Priorität; und
Bestimmen, von welchem Datenbereitstellungsgerät die Daten gemäß einer Benutzereingabe für die Auswahlbenutzeroberfläche erhalten werden sollen.

5. Verfahren nach einem der vorhergehenden Ansprüche, ferner umfassend das Stoppen der Datenerfassung von dem mindestens einen Gerät (101; 200; 300; 103, 105, 107; 202, 203, 204) auf der Grundlage des Tragezustands eines Benutzers oder eines Energiezustands für das mindestens eine Gerät.

6. Verfahren nach Anspruch 5, ferner umfassend das Erhalten der Daten durch Verwendung eines anderen elektronischen Geräts als das mindestens eine Gerät unter dem elektronischen Gerät (101; 200; 300) und dem mindestens einen externen Gerät (103, 105, 107; 202, 203, 204).

7. Elektronisches Gerät (200), umfassend:
ein Kommunikationsmodul (230), das konfiguriert ist, um mit mindestens einem externen Gerät (202, 203, 204) zu kommunizieren;
ein Sensormodul (1040), das konfiguriert ist, um Daten zu erfassen; und
ein Steuermodul (210; 320), das konfiguriert ist, um eine funktionale Verbindung mit dem Kommunikationsmodul und dem Sensormodul herzustellen,
wobei das Steuermodul (210; 320) ferner konfiguriert ist, um:
das mindestens eine externe Gerät (202, 203, 204) zu erkennen, wobei jedes der erkannten Geräte und das Sensormodul in der Lage sind, den gleichen Datentyp zur Verwendung durch das elektronische Gerät (200) bereitzustellen;
festzustellen, ob eine Anzahl des mindestens einen externen Geräts (202, 203, 204) größer als 1 ist,
wenn die Anzahl des mindestens einen externen Geräts (202, 203, 204) größer als 1 ist, eine Priorität des elektronischen Geräts (200) und des mindestens einen externen Geräts (202, 203, 204) auf der Grundlage von mindestens einer von den Tragezustands- und Authentifizierungsinformationen eines Benutzers festzulegen, die dem mindestens einen externen Gerät (202, 203, 204) entsprechen;
als Datenbereitstellungsgerät mindestens ein Gerät aus einer Gruppe zu bestimmen, die das elektronische Gerät (200) und das mindestens eine externe Gerät (200, 300, 400) umfasst, wobei die Bestimmung auf der Grundlage der festgelegten Priorität durchgeführt wird; und
Daten zur Verwendung durch das elektronische Gerät (101; 200; 300) über das mindestens eine bestimmte Gerät (101; 200; 300; 202, 203, 204) zu erhalten;
**dadurch gekennzeichnet, dass** das Steuermodul (210; 320) ferner konfiguriert ist, um: während des Erhaltens der Daten Situationsinformationsdaten des bestimmten mindestens einen Geräts zu erhalten,
zu bestimmen, dass ein Tragezustand des bestimmten mindestens einen Geräts gemäß den erhaltenen Situationsinformationsdaten geändert wird; und
wenn der Tragezustand des bestimmten mindestens einen Geräts geändert wird, die Priorität des elektronischen Geräts und des mindestens einen externen Geräts rückzusetzen, und
wobei der Tragezustand Informationen zum Anbringen und Entfernen an dem mindestens einen externen Gerät (202, 203, 204) für den Benutzer umfasst.

8. Elektronisches Gerät nach Anspruch 7, wobei das Steuermodul (210) ferner konfiguriert ist, um die Daten über mindestens eine Anwendung zu verwenden.

9. Elektronisches Gerät nach Anspruch 7 oder Anspruch 8, wobei das Steuermodul (210) ferner konfiguriert ist, um die Daten auf der Grundlage einer Regel zu verarbeiten, wobei mindestens eines von einem Daten-Parsingverfahren und einem Datenverarbeitungsverfahren spezifiziert ist.

10. Elektronisches Gerät nach einem der Ansprüche 7 bis 9, wobei das Steuermodul (210) konfiguriert ist, um eine Regel zum Verarbeiten von Daten zu erzeugen, die über das mindestens eine externe Gerät (202, 203, 204) auf der Grundlage einer Erkennung des mindestens einen externen Geräts erhalten werden.

11. Computerlesbares Aufzeichnungsmedium, das ein darauf aufgezeichnetes Programm aufweist, wobei das Programm ein Verfahren gemäß einem der Ansprüche 1 bis 6 implementiert, wenn es von einem elektronischen Gerät ausgeführt wird.

## Revendications

1. Procédé comprenant :
la reconnaissance, par un dispositif électronique (101 ; 200 ; 300) comprenant un module de capteur (1040) configuré pour détecter des données, d'au moins un dispositif externe (103, 105, 107 ; 202, 203, 204) communiquant avec le dispositif électronique, chacun desdits dispositifs reconnus et du dispositif électronique étant capable de fournir un même type de données ;
la détermination si un nombre de l'au moins un dispositif externe est supérieur à 1 ;
lorsque le nombre de l'au moins un dispositif externe est supérieur à 1, la définition d'une priorité du dispositif électronique et de l'au moins un dispositif externe sur la base d'au moins l'un parmi un état de port d'utilisateur et d'informations d'authentification correspondant à l'au moins un dispositif externe ;
la détermination en tant que dispositif de fourniture de données (101 ; 200 ; 300) d'au moins un dispositif parmi un groupe comprenant le dispositif électronique et l'au moins un dispositif externe reconnu (103, 105, 107 ; 202, 203, 204), ladite détermination étant effectuée sur la base de la priorité définie ; et
l'obtention, par le dispositif électronique (101 ; 200; 300), de données destinées à être utilisées par le dispositif électronique par le biais de l'au moins un dispositif déterminé (101 ; 200 ; 300 ; 103, 105, 107 ; 202, 203, 204), **caractérisé par** le procédé comprenant en outre :
pendant l'obtention des données, l'obtention de données d'informations de situation de l'au moins un dispositif déterminé (101 ; 200 ; 300 ; 103, 105, 107 ; 202, 203, 204) ;
la détermination si un état de port de l'au moins un dispositif déterminé (101 ; 200 ; 300 ; 103, 105, 107 ; 202, 203, 204) est modifié en fonction des données d'informations de situation obtenues ; et
lorsque l'état de port de l'au moins un dispositif déterminé (101 ; 200 ; 300 ; 103, 105, 107; 202, 203, 204) est modifié, la réinitialisation de la priorité du dispositif électronique (101 ; 200 ; 300) et de l'au moins un dispositif externe (103, 105, 107 ; 202, 203, 204), et
dans lequel l'état de port comprend des informations d'attachage-détachage sur l'au moins un dispositif externe (103, 105, 107 ; 202, 203, 204) pour l'utilisateur.

2. Procédé selon la revendication 1, dans lequel l'état de port comprend en outre des informations de mouvement sur l'utilisateur.

3. Procédé selon la revendication 1 ou la revendication 2, dans lequel la définition de la priorité comprend la définition de la priorité du dispositif électronique (101 ; 200 ; 300) et de l'au moins un dispositif externe (103, 105, 107 ; 202, 203, 204) sur la base supplémentaire d'un état d'alimentation pour l'au moins un dispositif externe (103, 105, 107 ; 202, 203, 204).

4. Procédé selon la revendication 1, dans lequel la détermination de l'au moins un dispositif (101 ; 200 ; 300 ; 103, 105, 107 ; 202, 203, 204) comprend :
la fourniture d'une interface utilisateur, UI, de sélection pour un dispositif de fourniture de données en conjonction avec la priorité ; et
la détermination du dispositif de fourniture de données à partir duquel obtenir les données conformément à une entrée d'utilisateur pour l'UI de sélection.

5. Procédé selon l'une quelconque des revendications précédentes, comprenant en outre l'arrêt de l'acquisition de données en provenance de l'au moins un dispositif (101 ; 200 ; 300 ; 103, 105, 107 ; 202, 203, 204) sur la base d'un état de port d'utilisateur ou d'un état d'alimentation pour l'au moins un dispositif.

6. Procédé selon la revendication 5, comprenant en outre l'obtention des données en utilisant un autre dispositif électronique autre que l'au moins un dispositif parmi le dispositif électronique (101 ; 200 ; 300) et l'au moins un dispositif externe (103, 105, 107 ; 202, 203, 204).

7. Dispositif électronique (200) comprenant :
un module de communication (230) configuré pour communiquer avec au moins un dispositif externe (202, 203, 204) ;
un module de capteur (1040) configuré pour détecter des données ; et
un module de commande (210 ; 320) configuré pour se connecter fonctionnellement au module de communication et au module de capteur,
dans lequel le module de commande (210 ; 320) est en outre configuré pour :
reconnaître l'au moins un dispositif externe (202, 203, 204), chacun desdits dispositifs reconnus et du module de capteur étant capable de fournir un même type de données à utiliser par le dispositif électronique (200),
déterminer si un nombre de l'au moins un dispositif externe (202, 203, 204) est supérieur à 1,
lorsque le nombre de l'au moins un dispositif externe (202, 203, 204) est supérieur à 1, définir une priorité du dispositif électronique (200) et de l'au moins un dispositif externe (202, 203, 204) sur la base d'au moins au moins l'un d'un d'état de port d'utilisateur et d'informations d'authentification correspondant à l'au moins un dispositif externe (202, 203, 204),
déterminer en tant que dispositif de fourniture de données au moins un dispositif parmi un groupe comprenant le dispositif électronique (200) et l'au moins un dispositif externe (200, 300, 400), la détermination étant effectuée sur la base de la priorité établie, et
obtenir des données destinées à être utilisées par le dispositif électronique (101 ; 200 ; 300) par le biais de l'au moins un dispositif déterminé (101 ; 200 ; 300 ; 202, 203, 204) ;
**caractérisé par** le module de commande (210 ; 320) étant en outre configuré pour : tout en obtenant les données, obtenir des données d'informations de situation de l'au moins un dispositif déterminé,
déterminer qu'un état de port de l'au moins un dispositif déterminé est modifié en fonction des données d'informations de situation obtenues, et
lorsque l'état de port de l'au moins un dispositif déterminé est modifié, réinitialiser la priorité du dispositif électronique et de l'au moins un dispositif externe, et
dans lequel l'état de port comprend des informations d'attachage-détachage sur l'au moins un dispositif externe (202, 203, 204) pour l'utilisateur.

8. Dispositif électronique selon la revendication 7, dans lequel le module de commande (210) est en outre configuré pour utiliser les données par le biais de l'au moins une application.

9. Dispositif électronique selon la revendication 7 ou la revendication 8, dans lequel le module de commande (210) est en outre configuré pour traiter les données sur la base d'une règle où au moins l'un d'un procédé d'analyse de données et d'un procédé de traitement de données est spécifié.

10. Dispositif électronique selon l'une quelconque des revendications 7 à 9, dans lequel le module de commande (210) est configuré pour générer une règle de traitement des données obtenues par le biais de l'au moins un dispositif externe (202, 203, 204) sur la base d'une reconnaissance de l'au moins un dispositif externe.

11. Support d'enregistrement lisible par ordinateur sur lequel est enregistré un programme, le programme mettant en œuvre un procédé selon l'une quelconque des revendications 1 à 6 lorsqu'il est exécuté par un dispositif électronique.
